# FASCICULE DE BREVET EUROPEEN

(11) **EP 2 046 558 B1**
(45) Date de publication et mention de la délivrance du brevet: **09.09.2020**
(21) Numéro de dépôt: 07803776.9
(22) Date de dépôt: 26.06.2007
(51) Int. Cl.: B29C 65/00, B29D 11/00, G02B 1/10

(54) **PROCEDE POUR APPLIQUER SUR UNE FACE D'UNE LENTILLE UN REVÊTEMENT ET APPAREIL POUR LA MISE EN OEUVRE D'UN TEL PROCEDE**
VERFAHREN ZUM AUFTRAGEN EINER BESCHICHTUNG AUF EINE LINSENFLÄCHE UND VORRICHTUNG ZUR UMSETZUNG EINES DERARTIGEN VERFAHRENS
METHOD OF APPLYING A COATING TO A FACE OF A LENS AND APPARATUS FOR THE IMPLEMENTATION OF SUCH A METHOD

(30) Priorité: 04.08.2006 FR 0607143
(43) Date de publication de la demande: 15.04.2009
(73) Titulaire: Essilor International, 94220 Charenton-le-Pont (FR)
(72) Inventeur: BARANTON, Konogan, 94220 Charenton Le Pont (FR); JOUFFROY, Hervé, 94220 Charenton Le Pont (FR); HADDADI, Ahmed, 94220 Charenton Le Pont (FR)
(74) Mandataire: Jacobacci Coralis Harle
(86) Numéro de dépôt international: PCT/FR2007/001063
(87) Numéro de publication internationale: WO 2008/017740

(56) Documents cités:
- EP-A1- 0 026 140
- EP-A1- 0 100 265
- WO-A-97/35216
- WO-A-03/004255
- GB-A- 2 253 917
- US-A- 2 298 037
- US-A- 3 482 371
- US-A- 3 560 076
- US-A- 3 964 958
- US-A- 5 503 694
- US-B1- 6 481 482

## Description

La présente invention concerne de manière générale la fabrication de lentilles ophtalmiques correctrices et/ou solaires de lunettes. Elle vise plus particulièrement un procédé et un appareil pour appliquer un revêtement sur une face de la lentille, ainsi qu'un dispositif de transfert de ce revêtement sur la face de la lentille.

### ARRIERE-PLAN TECHNOLOGIQUE

Afin d'améliorer les propriétés physiques et/ou optiques d'une lentille ophtalmique, il est connu de revêtir ses faces principales d'une ou plusieurs couches de traitement présentant les propriétés physiques ou optiques souhaitées, sur une face ou les deux faces de la lentille. Habituellement on procède par trempage de la lentille dans un bain ou par centrifugation du revêtement sous forme liquide, ou encore par dépôt sous vide de couches minérales ou organiques.

Récemment, il a été envisagé d'utiliser des revêtements solides qui se présentent sous forme de film initialement porté par un support et qui sont transférés par collage sur la face concernée de la lentille. Une difficulté consiste alors à appliquer le revêtement porté par son support contre la face concernée de la lentille de manière à, d'une part, éviter d'emprisonner des bulles d'air entre le revêtement en cours d'application et la lentille et, d'autre part, bien étaler la colle sur toute la surface de la lentille pour la répartir de façon sensiblement uniforme, sans zone d'épaisseur nulle ou de surcharge de colle. Il convient également d'obtenir une épaisseur de colle adaptée à la bonne tenue du revêtement sur la lentille et à la préservation des propriétés optiques de la lentille.

Le document WO03004255 propose, dans son mode de réalisation illustré par les figures 3A et 3B, un procédé pour appliquer sur une face d'une lentille ophtalmique un film de revêtement, porté par un support, comportant :
- la mise en place du support avec son film de revêtement sur la face de la lentille, une interface collante étant disposée entre le film de revêtement et la lentille,
- le gonflage d'une membrane en direction de la lentille pour plaquer le film de revêtement contre la lentille.

La demanderesse a pu observer qu'un tel procédé n'est pas adapté à l'application d'un film de revêtement sur des lentilles présentant des caractéristiques géométriques différentes les unes des autres, comme cela est le cas des lentilles ophtalmiques correctrices ou solaires dont la géométrie de surface doit être adaptée et au besoin de correction visuelle du porteur, ainsi qu'à la forme de la monture choisie. En effet, pour certaines lentilles, la colle n'est pas répartie sur toute la surface de la lentille ce qui peut dégrader la bonne tenue du revêtement sur la lentille. L'épaisseur de colle peut aussi ne pas être suffisante ou au contraire trop importante.

Il arrive également que, pour certaines lentilles, il ne reste pas suffisamment de colle au centre pour assurer une bonne tenue du revêtement. Enfin, le revêtement lui-même est parfois écrasé sur certaines parties, ce qui peut dégrader ses propriétés physiques et/ou optiques.

On connaît également du document EP 0026140 un procédé et un dispositif pour appliquer sur une face d'une pluralité de lentilles un film de revêtement grâce à une pluralité de membranes gonflables et un système de gonflage placés dans une presse.

### OBJET DE L'INVENTION

Le but de la présente invention est d'améliorer le collage du revêtement pour des lentilles présentant des caractéristiques physiques ou géométriques différentes les unes des autres.

À cet effet, on propose selon l'invention un procédé pour appliquer sur une face d'une lentille un film de revêtement, tel qu'énoncé dans la revendication 1.

L'invention concerne également un appareil pour appliquer sur une face d'une lentille un film de revêtement préalablement déposé sur la face de la lentille tel qu'énoncé dans la revendication 14.

Lors du gonflage de la membrane, celle-ci appuie progressivement sur le film de revêtement en étendant sa zone d'appui du centre de la lentille vers sa périphérie. Le réglage de la position de la lentille, ou de son siège, par rapport à la membrane permet d'adapter à chaque élément optique la répartition spatiale de la pression exercée par la membrane sur le film de revêtement à appliquer et l'intensité de cette pression, ainsi que la dynamique de la répartition de cette pression sur la face de la lentille.

Ainsi, le plaquage du film de revêtement sur la lentille peut-il être maîtrisé de manière à obtenir une bonne répartition de pression pour assurer un étalement correct de la colle, ou de l'interface collante, du centre de la lentille vers sa périphérie, avec une épaisseur de colle sensiblement uniforme sur toute la surface pour garantir la tenue du revêtement.

La maîtrise de la pression de la membrane exercée sur la lentille permet également d'éviter de déformer la lentille, ou encore de casser le film de revêtement ou son support.

Dans le domaine de l'optique ophtalmique en particulier, le laboratoire de prescription dispose ainsi d'un appareil et d'un procédé pour appliquer un revêtement sur une lentille de lunettes qui permet, pour des lentilles de caractéristiques physiques ou géométriques différentes, d'améliorer la qualité et la tenue du revêtement sur ces lentilles.

Selon une première caractéristique avantageuse de l'invention, les moyens de réglage de l'appareil comportent des moyens de détermination aptes à déterminer la position à régler du siège de la lentille par rapport à la partie de maintien de la membrane. Il est ainsi possible de déterminer la distance favorable entre le siège de la lentille et la membrane pour obtenir une bonne répartition de la pression d'application du film de revêtement sur la lentille.

Selon une autre caractéristique avantageuse de l'invention, ledit réglage de position est effectué en fonction d'au moins une caractéristique physique ou géométrique de la lentille. Les caractéristiques physiques ou géométriques de la lentille influencent de manière importante la répartition spatiale de la pression d'application du revêtement sur la lentille ainsi que son intensité. La détermination de la distance relative à régler de la lentille, ou de son siège, par rapport à la membrane en fonction de ces caractéristiques, permet d'améliorer l'application du revêtement sur chaque lentille présentant des caractéristiques physiques et/ou géométriques qui lui sont propres tout en garantissant l'intégrité de la lentille et du revêtement.

Selon une autre caractéristique avantageuse de l'invention, la caractéristique physique ou géométrique de la lentille, dont dépend ledit réglage de position, comporte l'épaisseur de la lentille au centre et/ou l'épaisseur au bord. Pour une lentille d'épaisseur importante, la distance de la lentille à la membrane est augmentée pour compenser le surcroît d'épaisseur et limiter la pression au centre de la lentille (la membrane étant centrée sur le centre de la lentille) et ainsi laisser une épaisseur de colle suffisante dans la partie centrale de la lentille, tandis que pour un élément optique d'épaisseur faible, la distance est diminuée pour obtenir une pression suffisante au centre de la lentille de manière à chasser la colle vers la périphérie de la lentille. La distance relative à régler entre la lentille et la membrane est ainsi déterminée en fonction de l'épaisseur de la lentille et/ou de l'épaisseur du revêtement avec son éventuel support de telle sorte que l'intensité de la pression de la membrane permette d'appliquer correctement le revêtement sur toute l'étendue de la lentille.

Selon une autre caractéristique avantageuse de l'invention, la caractéristique physique ou géométrique de la lentille, dont dépend ledit réglage de position, comporte une courbure de la lentille et/ou d'un support du film de revêtement. La distance relative à régler entre la lentille et la membrane est ainsi déterminée en fonction du galbe de la lentille et/ou du support de telle sorte que la répartition de la pression de la membrane permette d'appliquer correctement le revêtement sur toute l'étendue de la lentille.

Selon une autre caractéristique avantageuse de l'invention, la caractéristique physique ou géométrique de la lentille, dont dépend ledit réglage de position, comporte le matériau de la lentille et/ou du film de revêtement et/ou d'un support du film de revêtement. La prise en compte du matériau de la lentille, du revêtement ou de son support permet d'éviter de casser ou de trop déformer la lentille, le revêtement ou son support.

Selon une autre caractéristique avantageuse de l'invention, la caractéristique physique ou géométrique de la lentille, dont dépend ledit réglage, comporte un diamètre de la lentille. La prise en compte du diamètre de la lentille permet d'améliorer l'uniformité d'application du revêtement sur toute l'étendue de la lentille.

Selon une autre caractéristique avantageuse de l'invention, les moyens de réglage comportent des moyens de commande de la position du siège de la lentille par rapport à la partie de maintien de la membrane, qui sont pilotés par des moyens de pilotage en fonction de données fournies par les moyens de détermination. Les moyens de pilotage des moyens de commande permettent d'automatiser le déplacement de la lentille, ou de son siège, à sa position déterminée par rapport à la membrane.

Selon une autre caractéristique avantageuse de l'invention, ledit réglage de position comporte un prépositionnement de la lentille en une position initiale. Le prépositionnement permet par un simple décalage de la position initiale de la lentille d'optimiser pour chaque élément optique la répartition spatiale de la pression exercée par la membrane sur la lentille ainsi que l'intensité de cette pression.

Selon une autre caractéristique avantageuse de l'invention, ledit réglage de position comporte le pilotage dynamique de la position de la lentille pendant le gonflage de la membrane. La variation de la position de la lentille permet de faire varier l'intensité de pression sur les différentes parties de la lentille de manière à optimiser l'étalement de la colle, ou de l'interface collante, et donc l'application du revêtement sur toute l'étendue de la lentille.

Selon une autre caractéristique avantageuse de l'invention, ledit réglage de position comporte le pilotage de la variation de la position de la lentille par rapport à la membrane suivant au moins une fonction du temps prédéterminée. Cette fonction prédéterminée peut être obtenue à partir de plusieurs essais précédemment effectués. Il est ainsi possible de faire varier la position de la lentille suivant une fonction de variation dont on connaît le comportement et qui peut cumuler les améliorations d'essais antérieurs.

Selon une autre caractéristique avantageuse de l'invention, la fonction du temps prédéterminée est choisie parmi une pluralité de fonctions du temps prédéterminées. Il est ainsi possible de choisir la fonction du temps prédéterminée qui est la plus favorable à l'application du revêtement de la lentille compte tenu des conditions de l'application du revêtement telles que les caractéristiques de la lentille.

Selon une autre caractéristique avantageuse de l'invention, la fonction prédéfinie comporte au moins un déplacement de la lentille dans le sens opposé à la membrane, puis au moins un déplacement de la lentille vers la membrane. Ce mouvement de va-et-vient permet une meilleure répartition de la colle, ou de l'interface collante, sur la lentille ce qui permet d'obtenir une épaisseur de colle, ou de l'interface collante, sensiblement plus homogène et donc une meilleure tenue du revêtement sur la lentille.

Selon une autre caractéristique avantageuse de l'invention, le réglage comporte le pilotage de la variation de la position de la lentille par rapport à la membrane suivant une fonction qui dépend de l'effort exercé sur la lentille. Le pilotage dynamique de la position de la lentille en fonction de l'effort exercé permet de maîtriser la répartition de la colle, ou de l'interface collante, au cours du temps de manière à obtenir un effort exercé sur la lentille suffisant pour étaler la colle sur toute l'étendue de la lentille tout en bénéficiant d'une épaisseur de colle suffisante pour assurer la tenue du revêtement.

Selon une autre caractéristique avantageuse de l'invention, la face de la lentille sur laquelle est destiné à être appliqué le revêtement est concave. Typiquement dans le cas d'un élément optique du type d'une lentille ophtalmique, la lentille est généralement livrée avec sa face convexe déjà usinée et revêtue des revêtements adéquats. C'est l'usinage de la face concave qui permet alors d'obtenir une lentille dont les valeurs des caractéristiques optiques et géométriques sont conformes aux valeurs de prescription relatives au porteur. Il reste donc, après l'usinage de cette face concave, à lui appliquer le revêtement choisi. Le gonflement de la membrane génère une surface de pression qui épouse sensiblement la face concave de la lentille, ce qui favorise la répartition de la pression sur la face concave de la lentille pour appliquer le revêtement sur la face concave de la lentille. L'appareil pour appliquer le revêtement sur la face concave d'une lentille selon l'invention est donc particulièrement bien adapté aux besoins de l'opticien.

Selon un autre aspect avantageux de l'invention, ledit réglage de position peut être préalable et/ou conjoint au gonflage de la membrane.

Selon une autre caractéristique avantageuse de l'invention, la lentille étant destinée à être pourvue d'un bloc de maintien, le siège de la lentille est apte à recevoir ce bloc de maintien. Le bloc de maintien permet de conserver le référentiel de la lentille et donc de conserver la configuration géométrique de la face de la lentille qui est utilisée pour le réglage de manière à optimiser l'application de ce revêtement sur la face de la lentille.

L'invention concerne également un dispositif de transfert automatique d'un film de revêtement sur une face d'un élément optique, comportant :
- un appareil d'application comportant un appareil tel que défini ci-dessus, pour appliquer sur la face de la lentille le film de revêtement,
et l'un au moins des appareils suivants :
- un appareil de nettoyage de la lentille,
- un appareil de manipulation du revêtement pour saisir le film de revêtement et le déposer sur la face de la lentille,
- un appareil de dépose de colle sur la face de la lentille et/ou sur le film de revêtement,
des moyens de réception et de transport de la lentille étant prévus pour véhiculer la lentille d'un appareil à l'autre.

Un tel dispositif permet à l'opérateur d'automatiser la préparation et le transfert du revêtement sur la lentille.

### DESCRIPTION DETAILLEE D'UN EXEMPLE DE REALISATION

La description qui va suivre en regard des dessins annexés d'un mode de réalisation, donné à titre d'exemple non limitatif, fera bien comprendre en quoi consiste l'invention et comment elle peut être réalisée.

Dans les dessins annexés :
- la figure 1 est une vue d'ensemble en perspective d'un dispositif de préparation et de transfert d'un revêtement ;
- la figure 2 est une vue en perspective d'un appareil de réception et de distribution d'une lentille appartenant au dispositif de préparation et de transfert de revêtement ;
- la figure 3 est une vue en perspective d'une partie d'un appareil appartenant au dispositif pour appliquer sur la face de la lentille ophtalmique le revêtement ;
- la figure 4 est une vue schématique de l'appareil pour appliquer sur la face de la lentille ophtalmique le revêtement.

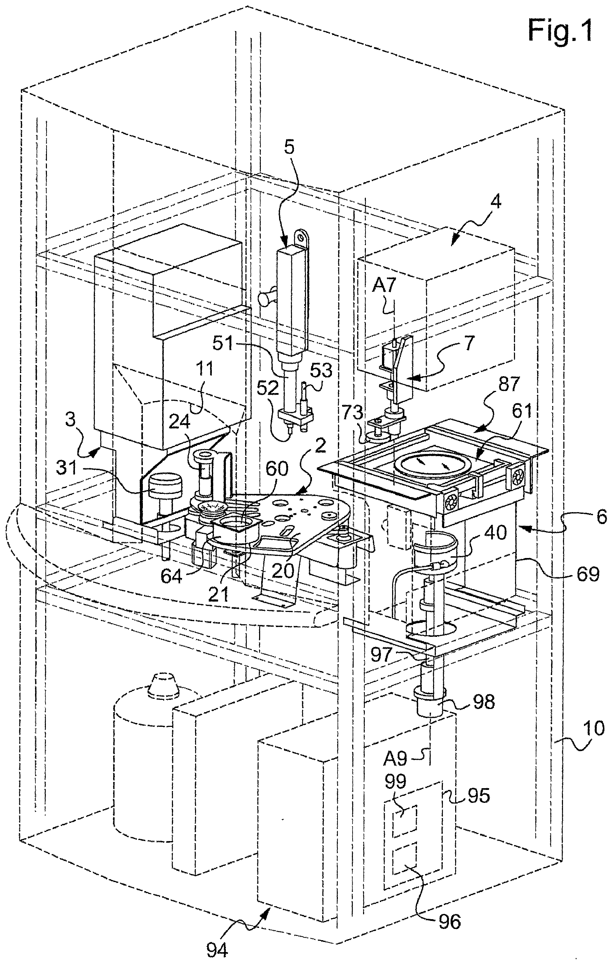

Sur la figure 1, on a représenté un dispositif de préparation et de transfert d'un revêtement 63 sur une face 108 d'une lentille 100. Par lentille, on entend un élément optique tel qu'un verre de lunettes correcteur ou non, une lentille d'instrument, etc. Ici, la face 108 de la lentille 100 sur laquelle est destinée à être appliqué le revêtement 63 est la face concave 108 de la lentille 100. Le revêtement 63 est un revêtement hydrophobe d'une épaisseur d'environ 50 micromètres.

Le revêtement 63 à transférer se présente typiquement sous la forme d'un film qui est initialement porté par un support 60 permettant sa manipulation et son conditionnement. Le support 60 est par exemple constitué par une plaquette de faible épaisseur en matière organique et est en l'espèce élastiquement flexible.

Ce dispositif de préparation et de transfert comporte tout d'abord un châssis 10 et une zone de chargement et de déchargement définie par une ouverture 11, ou porte, destinée, d'une part, au chargement de la lentille 100 et du support 60 portant le revêtement 63 avec son emballage 64, et, d'autre part, au déchargement de la lentille 100 une fois le revêtement déposé sur la lentille 100.

Pour le transfert du revêtement sur la lentille 100, le dispositif de préparation et de transfert comporte les appareils suivants :
- un appareil de manipulation 7 du revêtement 63 pour saisir le revêtement et le déposer sur la face concave de la lentille,
- un appareil de nettoyage 3 de la lentille 100,
- un appareil de dépôt de colle 5 sur la face de la lentille 100 et/ou sur le revêtement 63,
- un appareil 6 pour appliquer sur la face de la lentille ophtalmique le revêtement 63, encore appelé appareil d'application 6, et
- un appareil de réception et de distribution 2 d'une lentille 100 apte à véhiculer la lentille 100 d'un appareil à l'autre.

Le dispositif comporte également un appareil de durcissement 4 de la colle. Il est enfin prévu pour permettre le fonctionnement coordonné de l'ensemble de ces appareils une unité de traitement électronique 94.

Ces appareils sont décrits plus en détail ci-dessous.

### L'appareil de distribution

L'appareil de réception et de distribution 2 de la lentille 100 comporte essentiellement un carrousel 20 qui possède une mobilité de pivotement PIV1 autour d'un premier axe de pivotement A1.

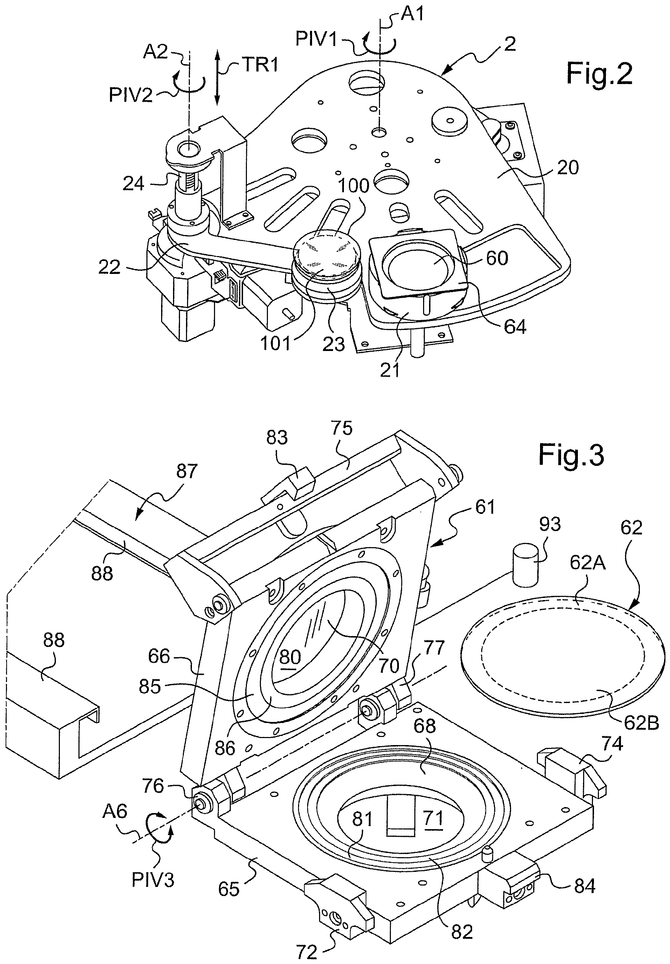

Comme représenté sur la figure 2, le carrousel 20 comprend un logement 21 adapté à recevoir le support 60 du revêtement 63 disposé dans son emballage 64. L'emballage 64 comprenant le support 60 de revêtement 63 repose dans le logement 21 avec la face supérieure 60A, opposée à la face inférieure 60B qui porte le revêtement 63, tournée vers l'extérieur de l'emballage 64, c'est-à-dire vers le haut sur le dessin de la figure 2.

Le carrousel 20 comporte également une fourchette 22 qui possède une mobilité de pivotement PIV2 autour, et une mobilité de translation TR1 le long, de l'axe A2 d'une potence 24 solidaire du carrousel 20. Cette fourchette possède également un logement 23.

### L'appareil de manipulation du revêtement

L'appareil de manipulation 7 du revêtement comporte un moyen de préhension 73 constitué ici par une ventouse déplaçable verticalement le long d'un axe A7. Le moyen de préhension 73 est monté de manière décentrée par rapport à l'axe A7 et possède également une mobilité de pivotement autour de cet axe A7.

### L'appareil de nettoyage de la lentille

L'appareil de nettoyage 3 comporte une entrée destinée à permettre le chargement de la lentille et de son bloc de maintien sur une embase de lavage 31. Cette embase est conçue pour, d'une part, maintenir la lentille et, d'autre part, conserver l'orientation de la lentille par exemple en étant pourvu, comme le logement 21 du carrousel, d'une forme complémentaire de l'élément de détrompage du bloc de maintien. Cet appareil comporte enfin des moyens de lavage tels que des moyens de pulvérisation de jets d'eau ainsi que des moyens de mise en rotation de l'embase de manière à sécher la lentille par centrifugation.

### L'appareil de dépôt de colle

L'appareil de dépôt de colle 5 comporte une seringue motorisée 51 de distribution d'une colle 46 durcissable par exposition aux rayons ultraviolet UV. Cette seringue est apte à délivrer un volume et un débit précis de colle. L'appareil de dépôt de colle 5 comporte également un capteur thermique et hygrométrique 53.

### L'appareil de durcissement de la colle

L'appareil de durcissement 4 de la colle 46 est positionné au-dessus (voir figure 1) de l'appareil d'application 6 du revêtement 63 et comporte des moyens de génération de rayons ultraviolet UV, en utilisant par exemple du gaz Xénon. Il est agencé avec l'appareil d'application 6 pour pouvoir exposer la colle 46 à ces rayons ultraviolet UV de manière à entraîner le durcissement de cette colle 46 entre le revêtement et la lentille. L'épaisseur de la couche finale de colle 46 est comprise entre 3 et 20 micromètres avec des résultats particulièrement probants pour une épaisseur de colle de 8 micromètres environ.

En variante, on peut prévoir d'utiliser une colle thermo-durcissable et donc de remplacer l'appareil d'exposition de la colle aux rayons ultraviolet par un appareil permettant de chauffer la colle disposée entre la lentille et le revêtement pour la durcir.

### Unité de traitement électronique et informatique

Le dispositif de préparation et de transfert comprend une unité de traitement électronique et informatique 94 consistant ici en une ou plusieurs cartes électroniques conçues pour piloter en coordination les appareils du dispositif de préparation et de transfert, conformément au procédé de préparation et de transfert qui sera exposé ultérieurement.

L'unité de traitement électronique et informatique 94 comprend par exemple de façon classique une carte mère, un microprocesseur, une mémoire vive et une mémoire de masse permanente. La mémoire de masse contient un programme d'exécution du procédé de préparation et de transfert qui sera décrit plus loin. Cette mémoire de masse est de préférence réinscriptible et est avantageusement amovible pour permettre son remplacement rapide ou sa programmation sur un ordinateur distant via une interface de norme standard.

### L'appareil pour appliquer le revêtement

L'appareil d'application 6 du revêtement 63 comporte tout d'abord un siège de lentille 40. La lentille 100 étant pourvue d'un bloc de maintien 101 matérialisant son référentiel, le siège de lentille 40 est apte à recevoir le bloc de maintien 101 sur lequel est maintenue la lentille. Le siège de lentille 40 est ici constitué d'un mandrin adapté à serrer et maintenir plusieurs types de bloc de maintien.

Comme représenté sur la figure 3, l'appareil d'application 6 comporte également une membrane 62 et des moyens de gonflage 61 de la membrane 62 en direction du siège de lentille 40. La membrane présente une partie gonflable 62B et une partie de maintien 62A.

Les moyens de gonflage 61 comportent une première plaque 66, ou plaque supérieure, et une seconde plaque 65, ou plaque inférieure, entre lesquelles est disposée la membrane 62.

La plaque supérieure 66 présente, en renfoncement, une chambre de pressurisation 80 reliée à une source de gaz comprimé 93. La chambre de pressurisation 80 peut ainsi être mise sous pression à une valeur donnée comprise entre 1 et 3 bars, et de préférence 2 bars.

La plaque supérieure 66 comporte également un hublot vitré 70 délimitant partiellement la chambre de pressurisation 80 et apte à transmettre un rayonnement ultraviolet UV. La membrane est elle aussi conçue (en matériau transparent par exemple), de manière à laisser passer les rayons ultraviolet.

La plaque inférieure 65 comporte une ouverture centrale traversante et, ici, un insert amovible qui définit une ouverture de protrusion 71 est rapporté dans cette ouverture centrale traversante. L'ouverture de protrusion 71 est évasée vers la membrane 62. En particulier ici, l'ouverture de protrusion 71 de la plaque inférieure 65 est tronconique. La plus petite section du cône peut affleurer la face inférieure de la plaque inférieure (orientée vers le siège 40), ou s'étendre au-delà de cette face inférieure en formant une saillie. Le diamètre de la plus petite section du cône est égal ou supérieur au diamètre du support du revêtement.

Les deux plaques 66, 65 sont montées pour pivoter l'une par rapport à l'autre entre, d'une part, une configuration d'ouverture dans laquelle les deux plaques sont écartées l'une de l'autre pour permettre l'insertion ou le remplacement de la membrane 62 et, d'autre part, une configuration de fermeture dans laquelle les deux plaques 66, 65 sont plaquées l'une contre l'autre.

Les plaques 66, 65 sont montées l'une sur l'autre au moyen de charnières 76, 77 qui confèrent à la plaque supérieure 66 la mobilité de pivotement PIV3 relativement à la plaque inférieure 65 autour d'un axe de pivotement A6. Il est également prévu une poignée 75 sur la plaque supérieure 66 qui permet à l'opérateur de se saisir de la plaque supérieure 66 pour la faire pivoter autour de l'axe de pivotement A6. Il est également prévu des moyens de verrouillage et de serrage 83, 84 des deux plaques dans leur configuration de fermeture. Les moyens de verrouillage et de serrage 83, 84 comportent un crochet 83 monté sur la poignée 75 de manière à être emboîté avec un élément de blocage 84 solidaire de la plaque inférieure 65.

Dans la configuration de fermeture, les deux plaques 66, 65 sont plaquées l'une contre l'autre de telle manière que, d'une part, la chambre de pressurisation 80 de la première plaque 65 et l'ouverture de protrusion 71 de la seconde plaque 66 soient situées en regard de la partie gonflable 62B de la membrane 62, et que, d'autre part, la partie périphérique de maintien 62A de la membrane 62 soit maintenue par pincement entre les deux plaques 66, 65.

La plaque inférieure 65 comporte, en renfoncement, des logements circulaires 81, 82, étagés, c'est-à-dire situés à des profondeurs différentes et de différents diamètres, centrés sur l'ouverture de protrusion de la plaque inférieure 65. Ces logements circulaires 81, 82, sont ainsi aptes à accueillir des membranes de diamètre correspondant à celui des logements circulaires 81, 82. La plaque supérieure 66 comporte également, en saillie, des parties annulaires 85, 86, étagées de diamètre correspondant au diamètre des logements circulaires 81, 82. Les parties annulaires 85, 86 sont destinées à coincer la partie périphérique 62A de la membrane 62 dans le logement circulaire 81, 82 correspondant.
Cette partie périphérique 62A de la membrane 62 constitue ainsi la partie de maintien 62A de la membrane, et la partie centrale 62B de la membrane, qui est libre, constitue la partie gonflable 62B, ou partie de gonflage, de cette membrane.

L'ouverture de protrusion 71 permet de guider latéralement la déformation de la partie de gonflage 62B de la membrane lors de son gonflement. En variante, on peut également prévoir que l'ouverture centrale traversante de la plaque inférieure présente des parois évasées conçues pour guider la partie de gonflage de la membrane, de manière à former l'ouverture de protrusion sans avoir besoin de recourir à un insert.

Il est prévu plusieurs inserts 68 présentant des ouvertures de protrusion 71 de différentes largeurs. L'opérateur peut ainsi sélectionner et disposer dans l'ouverture centrale traversante de la plaque inférieure 65 l'insert le mieux adapté pour l'application du revêtement sur la lentille.

Les deux plaques 65, 66 forment un sous-ensemble extractible 61. Ce sous-ensemble extractible 61 est monté sur des glissières 88 de manière à s'insérer et s'extraire d'un logement d'accueil associé 87 à la façon d'un tiroir. Ce logement d'accueil 87 est solidaire du châssis 69 de l'appareil d'application 6.

La plaque inférieure 65 est pourvue sur sa face latérale d'éléments 72, 74 qui viennent s'engager dans les glissières 88 lors du montage du sous-ensemble extractible 61 dans le logement d'accueil 87. Les éléments 72, 74 constituent également des moyens d'accroche du sous ensemble extractible dans le logement d'accueil associé 87.

Bien entendu, durant l'opération de préparation et de transfert du revêtement sur la lentille, le sous-ensemble extractible 61 reste solidaire du châssis 69 de l'appareil d'application 6 du revêtement.

En pratique, après le traitement d'une série de l'ordre d'une trentaine de lentilles, la membrane est changée. On peut également prévoir de changer l'insert en fonction des caractéristiques de la lentille et/ou du support du revêtement.

L'appareil d'application 6 comporte des moyens de réglage 95 de la position du siège de lentille 40 par rapport à la partie de maintien 62A de la membrane 62. Ces moyens de réglage 95 sont ici intégrés à l'unité de traitement électronique et informatique 94.

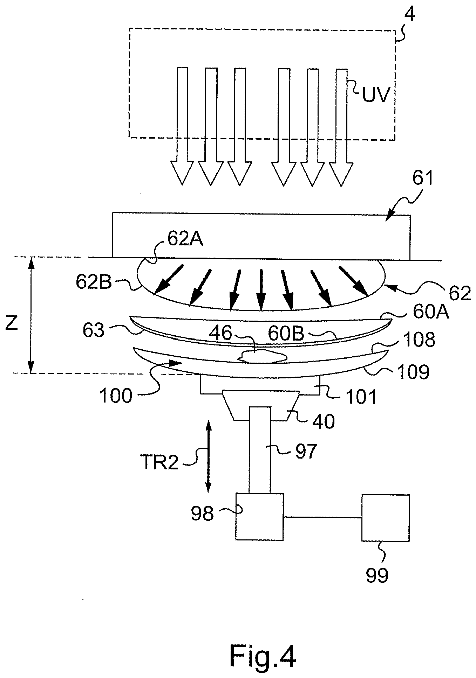

Pour régler la position du siège de lentille 40 par rapport à la partie de maintien 62A de la membrane 62, les moyens de réglage 95 règlent la distance Z entre le fond du siège de lentille 40 et la partie de maintien 62A de la membrane 62 (figure 4).

Dans la suite de la description, le réglage de la position du siège de lentille 40 par rapport à la partie de maintien 62A de la membrane 62 est équivalent au réglage de la position de la lentille 40 elle-même par rapport à la partie de maintien 62A de la membrane, puisque cette lentille 100 est, lors du réglage, solidaire du siège de lentille 40. De même, lorsqu'il est fait référence au réglage de la position de la lentille (ou de son siège) par rapport à la membrane (en général), il s'agit du réglage de la position du siège de lentille 40 par rapport à la partie de maintien 62A de la membrane 62, c'est-à-dire la partie non-gonflable de la membrane.

Les moyens de réglage 95 comportent ici des moyens de détermination 96, électriques, aptes à déterminer la position à régler du siège de lentille 40 par rapport à la membrane. Ici, ces moyens de réglage peuvent comprendre une carte électronique implantée dans l'unité de traitement électronique 94. Ces moyens de détermination 96 sont conçus et programmés pour déterminer la position à régler du siège de lentille 40 par rapport à la membrane en fonction d'au moins une caractéristique physique et/ou géométrique de la lentille 100.

Une des caractéristiques de la lentille 100 préférentiellement prise en compte est la courbure de la face de la lentille 100 sur laquelle est destiné à être appliqué le revêtement et/ou la courbure du support 60 du revêtement 63. Une autre caractéristique de la lentille 100 intéressante à prendre en compte est l'épaisseur au centre ou l'épaisseur au bord de la lentille 100, ou la combinaison de ces deux épaisseurs.

D'autres caractéristiques peuvent également être prises en compte telles que le matériau de la lentille 100 ou le diamètre de la lentille 100. On peut aussi tenir compte des caractéristiques du support 60 du revêtement 63 telles que son épaisseur, son diamètre, sa courbure et son matériau. Enfin, on peut tenir compte des caractéristiques du revêtement lui-même, et/ou de la membrane et/ou de l'insert.

Les moyens de réglage 95 comportent également des moyens de commande 97, 98 de la position du siège de lentille 40 par rapport à la partie de maintien 62A de la membrane, qui sont pilotés par des moyens de pilotage 99. Ici les moyens de pilotage comportent une carte électronique implantée dans l'unité de traitement électronique et sont conçus et programmés de telle sorte que le siège de lentille 40 soit déplacé à la position déterminée par les moyens de détermination 96.

Ces moyens de commande 97, 98 comportent un vérin 97 d'axe A9 à une extrémité duquel est fixé le siège de lentille 40, ainsi qu'un moteur 98 relié à l'autre extrémité du vérin 97 pour déplacer ce vérin 97 et donc le siège de lentille 40 en translation TR2 le long de l'axe A9 du vérin 97.

### Procédé de préparation et de transfert du revêtement sur la lentille

L'usinage de la face concave 108 de la lentille 100 est réalisé précédemment sur un appareil adapté (non représenté) pour l'usinage de la surface d'une lentille en fonction des valeurs des caractéristiques géométriques et optiques prescrites pour la lentille 100. La géométrie de la face concave 108 de la lentille 100 ainsi obtenue est mémorisée. La lentille 100 est ensuite équipée de son bloc de maintien 101 pour conserver le référentiel optique de la lentille 100, notamment son orientation. Le référentiel de la lentille 100 est ainsi connu par rapport à l'élément de détrompage du bloc de maintien.

L'opérateur dépose ensuite le support 60 de revêtement 63 avec son emballage 64 dans le logement 21 du carrousel 20. Ici, le support 60 de revêtement 63 présente une face inférieure 60B sur laquelle est disposé le revêtement 63 à appliquer sur la face concave 108 de la lentille 100 et une face supérieure 60A opposée.

Le support 60 est flexible et sa face inférieure 60B présente une configuration géométrique semblable à celle de la face concave 108 de la lentille 100, c'est-à-dire que cette face inférieure 60B est concave, de courbure semblable à celle de la face concave 108 de la lentille. Préférentiellement, la face inférieure 60B du support 60 présente un rayon de courbure un peu plus important que celui de la face concave 108 de la lentille de telle sorte que la partie périphérique du revêtement ne touche la partie périphérique de la lentille qu'une fois la partie centrale du revêtement 63 correctement appliquée sur la partie centrale de la face concave 108 de la lentille.

Le support 60 peut être réalisé en plastique ou en polycarbonate. L'épaisseur du support 60 peut varier entre 0,3 et 1 mm.

L'opérateur positionne également la lentille 100 munie de son bloc de maintien dans le logement 23 de la fourchette 22. Ici, la lentille 100 est pourvue initialement d'un revêtement sur sa face convexe 109 destinée à être placée en contact avec le siège de lentille 40.

Comme rappelé ci-dessus, le bloc de maintien 101 est équipé d'une forme de détrompage et le logement 23 de la fourchette 22 présente la forme correspondante de détrompage du bloc de maintien de manière à permettre le positionnement précis du bloc de maintien 101 dans le logement 23 en conservant le référentiel de la lentille 100.

### Préhension du support de revêtement

Le carrousel 20 pivote dans le sens trigonométrique pour positionner le logement 21 qui accueille le support 60 de revêtement et son emballage 64 en vis-à-vis de l'appareil de manipulation 7 du revêtement. Le moyen de préhension 73, est déplacé, au moyen de ses mobilités de translation le long et de pivotement autour de l'axe A7, pour saisir le support 60. Puis, le moyen de préhension 73 est remonté de manière à extraire le support 60 de son emballage 64.

### Nettoyage de la lentille

Une fois le support 60 extrait de son emballage 64 et maintenu par le préhenseur 73, le carrousel 20 pivote en sens inverse du sens trigonométrique pour positionner le logement 23 de la fourchette 22, qui accueille la lentille 100 et son bloc de maintien 101, en vis-à-vis de l'appareil de nettoyage 3. Au moyen des mobilités de pivotement PIV2 et de translation TR1 de la fourchette 22, la lentille 100 est positionnée dans l'appareil de lavage 3. La lentille 100 et son bloc de maintien 101 sont saisis et positionnés dans le réceptacle 31 adapté à maintenir la lentille 100 suivant une orientation connue, au moyen, par exemple, d'une partie du réceptacle dont la forme est complémentaire de la forme de l'élément de détrompage du bloc de maintien 101.

Une fois la lentille 100 et son bloc de maintien 101 disposés dans l'appareil de lavage 3, des jets d'eau sont projetés sur la lentille 100. Puis la lentille 100 est séchée par centrifugation en la faisant tournée sur elle-même à une vitesse de 2200 tours par minute. Ce lavage permet d'évacuer les impuretés et les copeaux sur la face concave 108 de la lentille 100 résultant de l'usinage (réalisé auparavant) de cette face concave 108.

La rotation de la lentille 100 lors du séchage est réalisée de manière à conserver l'orientation de la lentille 100. La position angulaire de la lentille 100 étant connue, la lentille 100 est replacée dans le logement 21 en conservant son référentiel optique.

### Dépôt de colle

Le carrousel 20 pivote dans le sens trigonométrique pour positionner le logement 23 de la fourchette 22 qui accueille la lentille 100 et son bloc de maintien 101 en vis-à-vis de l'appareil de dépôt de colle 5

Le référentiel optique de la lentille 100 étant conservé, la configuration géométrique de la face concave 108 de la lentille 100 est toujours entièrement connue. Le déplacement de la lentille 100, au moyen des mobilités de translation TR1 le long de l'axe de la potence 24 et de pivotement PIV2 autour de cet axe A2, est alors piloté par l'unité de traitement électronique, en accord avec la configuration géométrique de la lentille 100 de telle sorte que le nez 52 de la seringue 51 de colle durcissable ne touche pas la lentille 100 et de telle sorte qu'il n'y ait pas de formation de gouttes de colle sur la lentille 100. Le déplacement de la lentille 100 relativement par rapport à la seringue de colle est ainsi piloté pour déposer des traits de colle ou des points de colle à des endroits localisés et précis de la face concave 108 de la lentille 100.

Le dépôt de colle 46 est ainsi réalisé en trois dimensions sur la lentille 100 pour suivre la courbure de la lentille 100. En particulier, ce dépôt de colle est réalisé en continu et à distance maîtrisée de la lentille 100 pour ne pas créer de gouttes de colle.

### Transfert de revêtement

Le carrousel 20 pivote dans le sens trigonométrique pour positionner la lentille 100 et son bloc de maintien 101, en vis-à-vis de l'appareil d'application 6 du revêtement 63. La lentille est alors déposée, au moyen des mobilités de pivotement et de translation de la fourchette 22, dans le siège de lentille 40.

Puis, le support 60 du revêtement 63 est délicatement déposé, du côté de la face inférieure 60B qui porte le revêtement 63, par le moyen de préhension 73 de l'appareil de manipulation 7, sur la face concave 108 de la lentille 100 sur laquelle a été déposée la colle 46 durcissable (figure 4).

Les moyens de réglage 95 sont alors utilisés pour régler la position de la lentille 100 par rapport à la membrane 62, ce réglage étant distinct du gonflage de la membrane 62. Tout d'abord, les moyens de détermination 96 déterminent la position à régler du siège de lentille par rapport à la membrane selon l'une ou plusieurs des caractéristiques physiques ou géométriques de la lentille. En variante, comme rappelé ci-avant, il est également possible de déterminer la position à régler du siège de lentille en fonction des caractéristiques physiques ou géométriques du revêtement lui-même et/ou de la membrane et/ou de l'insert.

### Réglage statique

Selon un premier mode de réalisation, le réglage comporte un prépositionnement de la lentille 100 en une position initiale, préalablement au gonflage de la membrane 62.

Ce prépositionnement est réalisé par réglage de la distance Z entre le fond du siège de lentille 40 et la partie de maintien 62A de la membrane 62. Cette distance Z peut être réglée entre une valeur minimale de 20 mm et une valeur maximale de 40 mm.

La distance Z initiale à régler est fonction de différentes valeurs de caractéristiques physiques et géométriques de la lentille pour assurer la bonne application du revêtement sur la lentille. Ce prépositionnement dépend entre autre du diamètre de l'insert, du matériau de la lentille, de la courbure de la face concave de la lentille, de l'épaisseur de la lentille, du diamètre de la lentille.

Dans les exemples qui suivent, le diamètre de l'insert est de 80 mm, la lentille est en matériau polycarbonate et de diamètre 70 mm.

Pour une lentille de forte épaisseur au centre (supérieure à 7 mm) la distance Z initiale est réglée sensiblement à la valeur maximale de 40 mm pour compenser la diminution du rayon de gonflage de la membrane due à l'importante épaisseur de la lentille. Inversement pour une lentille de faible épaisseur au centre (inférieure à 2 mm), la distance Z est réglée sensiblement à la valeur minimale de 20 mm.

De même pour une lentille fortement cambrée, c'est-à-dire ayant une face arrière présentant une grande courbure (par exemple présentant une puissance surfacique supérieure à 7 dioptries pour une lentille en Polycarbonate d'indice 1,5), la distance Z initiale est réglée sensiblement à la valeur maximale de 40 mm pour que la membrane puisse s'étendre suffisamment lors de son gonflage de manière à atteindre un rayon de courbure suffisamment faible pour épouser le rayon de courbure de la lentille. Inversement pour une lentille faiblement cambrée (par exemple présentant une puissance surfacique inférieure à 4 dioptries pour une lentille en Polycarbonate d'indice 1,5), la distance Z est réglée sensiblement à la valeur minimale de 20 mm.

Pour une lentille de cambrure moyenne et/ou d'épaisseur moyenne, la distance Z est réglée sensiblement à la valeur moyenne de 30 mm.

Le réglage de la position de la lentille 100 par rapport à la membrane 62 est ici préalable au gonflage de la membrane 62. En variante, on peut prévoir que le réglage de la position de la lentille 40 par rapport à la membrane 62 est conjoint au gonflage de la membrane 62.

Quoi qu'il en soit la chambre de pressurisation des moyens de gonflage est pressurisée et la membrane gonfle (figure 4) pour sortir en hernie par l'ouverture de protrusion 71 de la plaque inférieure 65. La partie centrale de la membrane 62 appuie tout d'abord sur la partie centrale de la face supérieure 60B du support qui transmet l'effort de pression à la partie centrale de la face concave 108 de la lentille prépositionnée. Puis la membrane 62 exerce en se gonflant un effort de pression qui s'étend progressivement du centre vers la périphérie de la face concave 108 de la lentille (par l'intermédiaire du support 60). Le revêtement 63 est donc appliqué sur la lentille 100 du centre de la lentille vers sa périphérie en même temps que la colle 46 est chassée du centre vers la périphérie de la lentille.

### Réglage dynamique

Selon un deuxième mode de réalisation, qui peut être ou non réalisé à la suite du premier mode de réalisation, c'est-à-dire une fois la lentille prépositionnée, le pilotage dynamique de la position de la lentille 100 est réalisé pendant le gonflage de la membrane 62.

Le pilotage dynamique de la position de la lentille 100 par rapport à la membrane 62 peut tout d'abord être réalisé suivant une fonction du temps prédéterminée. Ici, la fonction prédéterminée comporte au moins un déplacement du siège de lentille (donc de la lentille 100) dans le sens opposé à la membrane 62, puis au moins un déplacement du siège de la lentille 100 vers la membrane 62.

La fonction prédéterminée peut comporter plusieurs séries de déplacements de la position du siège de lentille, chaque série comportant un premier déplacement suivi d'un deuxième déplacement tels que décrits ci-dessus. Ce mouvement de va-et-vient de la lentille 100 permet d'améliorer la répartition de la colle 46 et donc l'application du revêtement 63 sur toute la surface de la face concave 108 de la lentille.

Cette fonction du temps prédéterminée peut être unique ou choisie parmi une pluralité de fonctions du temps prédéterminées. Ces fonctions prédéterminées peuvent être établies empiriquement.

La fonction prédéterminée peut encore être calculée individuellement pour chaque lentille en fonction de la ou les caractéristiques physiques et/ou géométriques de la lentille 100.

En variante de ce deuxième mode de réalisation de l'invention, on peut prévoir de piloter les moyens de commande 97,98 pour faire varier la position du siège de lentille 40 par rapport à la membrane suivant au moins une fonction qui dépend de l'effort exercé sur la lentille 100. Cet effort est préférentiellement mesuré au centre de la face de cette lentille au moyen d'un capteur d'effort approprié. Contrairement au premier et au deuxième mode de réalisation, cette fonction n'est pas prédéterminée.

Quoi qu'il en soit, de manière similaire au premier mode de réalisation, le gonflement de la membrane exerce sur la lentille un effort de pression dont la dynamique de répartition spatiale et l'intensité varient conformément au pilotage dynamique du déplacement du siège de lentille 40. Cet effort de pression de la membrane sur la lentille, par l'intermédiaire du support du revêtement, permet l'application du revêtement sur toute la surface de la face concave 108 de la lentille.

Quel que soit le mode de réalisation, après que le revêtement a été complètement appliqué sur toute la surface de la face concave 108 de la lentille, du centre vers la périphérie de cette face concave 108, la colle 46 est exposée aux rayons ultraviolet UV émis par l'appareil de durcissement 4, ce qui entraîne le durcissement de cette colle 46 entre le revêtement et la lentille.

Le carrousel 20 revient ensuite à la position initiale de chargement et de déchargement selon laquelle le logement 23 de la lentille est positionné en vis-à-vis de l'ouverture 11 du dispositif de préparation et de transfert.

Une fois la colle 46 séchée, on retire le support 60 du revêtement et l'on obtient une lentille comportant un revêtement correctement transféré sur la face concave 108 de la lentille.

La présente invention n'est pas limitée aux modes de réalisation décrits et représentés, mais l'homme du métier saura y apporter toute variante conforme à son esprit.

En variante, on peut prévoir de remplacer le vérin sur lequel est fixé le siège de lentille par un dispositif adapté à être positionné à différentes hauteurs, de valeurs discrètes, à la manière d'un cric par exemple. Au moyen d'abaques obtenus de manière empirique, l'opérateur peut déterminer parmi l'ensemble des positions discrètes disponibles, en fonction des caractéristiques physiques et/ou géométriques de la lentille par exemple, la position à laquelle doit être amené le siège de lentille pour favoriser l'application du revêtement. Selon cette variante, les moyens de réglage peuvent être manuels ou automatisés.

On peut également prévoir pour le rapprochement du siège de lentille de la partie de maintien de la membrane, d'utiliser un dispositif rotatif de type carrousel comportant plusieurs sièges de lentille adaptés à recevoir la lentille et son bloc de maintien qui sont alors situés à différentes hauteurs les uns par rapport aux autres. Il suffit de tourner le carrousel pour sélectionner et placer en vis-à-vis de la membrane le siège de lentille dont la distance à la partie de maintien de la membrane correspond à la distance déterminée pour procéder au transfert optimisé du revêtement sur la lentille.

Bien entendu, quel que soit le mode de réalisation exécuté, d'autres caractéristiques peuvent être prises en compte pour déterminer la distance à régler entre le siège de lentille et la partie de maintien de la membrane telles que par exemple les caractéristiques de la membrane.

Le revêtement peut également être un revêtement antireflet, un revêtement anti-abrasif, un revêtement résistant aux chocs, un revêtement photochromique, un revêtement polarisé ou un autre type de revêtement. On peut encore prévoir de mettre en œuvre l'invention décrite ci-dessus pour concevoir une lentille comportant un empilement de plusieurs revêtements.

## Revendications

1. Procédé pour appliquer sur une face (108) d'une lentille (100) un film de revêtement (63), ladite lentille (100) étant reçue sur un siège (40) de lentille (100), comportant :
- le dépôt du film de revêtement (63) sur la face concernée (108) de la lentille (100), une interface collante (46) étant disposée entre le film de revêtement (63) et la lentille,
- le gonflage d'une membrane (62) en direction de la lentille (100) pour plaquer le film de revêtement contre la lentille (100), ladite membrane (62) comportant une partie gonflable (62B) et une partie de maintien (62A),
- le réglage d'une distance (Z) entre un fond du siège (40) de la lentille (100) et la partie de maintien (62A) de la membrane (62), ce réglage étant distinct du gonflage de la membrane (62) et effectué en fonction d'au moins une caractéristique de la lentille (100), ledit réglage de la distance (Z) comportant un prépositionnement de la lentille (100) en une position initiale,
**caractérisé en ce que** ledit réglage de la distance (Z) comporte le pilotage dynamique de la position de la lentille (100) pendant le gonflage de la membrane (62).

2. Procédé selon la revendication précédente, dans lequel la caractéristique de la lentille (100), dont dépend ledit réglage de position, comporte l'épaisseur au centre et/ou l'épaisseur au bord de la lentille (100).

3. Procédé selon l'une des deux revendications précédentes, dans lequel ladite caractéristique de la lentille (100), dont dépend ledit réglage de position, comporte une courbure de la face concernée de la lentille (100).

4. Procédé selon l'une des trois revendications précédentes, dans lequel la caractéristique de la lentille (100), dont dépend ledit réglage de position, comporte un diamètre de la lentille (100).

5. Procédé selon la revendication précédente, dans lequel ledit réglage de position comporte le pilotage de la variation de la position de la lentille (100) par rapport à la membrane (62) suivant au moins une fonction du temps prédéterminée.

6. Procédé selon la revendication précédente, dans lequel la fonction prédéterminée est choisie parmi une pluralité prédéfinie de fonctions du temps prédéterminées.

7. Procédé selon la revendication 6, prise en dépendance de la revendication 1, dans lequel la fonction prédéterminée est calculée en fonction de ladite au moins une caractéristique physique et/ou géométrique de la lentille (100).

8. Procédé selon l'une des trois revendications précédentes, dans lequel la fonction prédéterminée comporte au moins un déplacement de la lentille (100) dans le sens opposé à la membrane (62), puis au moins un déplacement de la lentille (100) vers la membrane (62).

9. Procédé selon l'une des revendications 1 à 5, dans lequel le réglage comporte le pilotage de la variation de la position de la lentille (100) par rapport à la membrane (62) suivant une fonction qui dépend de l'effort exercé sur la lentille (100).

10. Procédé selon l'une des revendications précédentes, dans lequel la face (108) de la lentille (100) sur laquelle est destinée à être appliqué le revêtement (63) est concave.

11. Procédé selon l'une des revendications 1 à 5, dans lequel le réglage de la position de la lentille (100) par rapport à la membrane (62) est préalable au gonflage de la membrane (62).

12. Procédé selon l'une des revendications 1 à 5, dans lequel le réglage de la position de la lentille (100) par rapport à la membrane (62) est conjoint au gonflage de la membrane (62).

13. Appareil (6) pour appliquer sur une face (108) d'une lentille (100) un film de revêtement (63) préalablement déposé sur la face concernée de la lentille, comportant :
- un siège (40) de lentille (100),
- une membrane (62) comprenant une partie de maintien (62A) et une partie gonflable (62B),
- des moyens de gonflage (61) de la membrane (62) en direction du siège (40) de lentille (100), ces moyens de gonflage comportant des moyens de maintien (65, 66) de la partie de maintien (62A) de la membrane et des moyens de mise sous pression (65, 66) de la partie gonflable (62B) de la membrane (62),
- **caractérisé en ce qu'**il comporte des moyens de réglage (95) de la distance (Z) entre le siège (40) de la lentille et la partie de maintien (62A) de la membrane (62), ce réglage étant effectué en fonction d'au moins une caractéristique de la lentille (100) et comportant un prépositionnement de la lentille (100) en une position initiale et le pilotage dynamique de la position de la lentille (100) pendant le gonflage de la membrane (62), lesdits moyens de réglage (95) comportant :
- des moyens de détermination (96) aptes à déterminer la position à régler du siège (40) de la lentille par rapport à la partie de maintien (62A) de la membrane (62) et
- des moyens de commande (97, 98) de la position du siège (40) de la lentille par rapport à la partie de maintien (62A) de la membrane (62), qui sont pilotés par des moyens de pilotage (99) en fonction de données fournies par les moyens de détermination (96).

14. Appareil selon la revendication précédente, dans lequel les moyens de détermination (96) sont aptes à déterminer la position à régler du siège (40) de la lentille par rapport à la partie de maintien (62A) de la membrane (62) en fonction d'au moins une caractéristique physique et/ou géométrique de la lentille (100).

15. Appareil selon l'une des revendications 13 à 14, dans lequel le siège (40) est apte à recevoir un bloc de maintien (101) d'une lentille ophtalmique (100) constituant la lentille.

16. Dispositif de transfert automatique d'un film de revêtement (63) sur une face d'une lentille (100) comportant :
- un appareil d'application (6) selon l'une des revendications 13 à 15, pour appliquer sur la face de la lentille le film de revêtement (63),
et l'un au moins des appareils suivants :
- un appareil de nettoyage (3) de la lentille (100),
- un appareil de manipulation (7) du revêtement (63) pour saisir le film de revêtement (63) et le déposer sur la face de la lentille (100),
- un appareil de dépose de colle (5) sur la face de la lentille (100) et/ou sur le film de revêtement (63),
des moyens de réception et de transport (2) de la lentille (100) étant prévus pour véhiculer la lentille (100) d'un appareil à l'autre.

17. Dispositif selon la revendication précédente, dans lequel l'appareil d'application (6) comporte également des moyens de durcissement (4) de la colle.

18. Dispositif selon l'une des deux revendications précédentes, dans lequel les moyens de réception et de transport (2) possèdent une mobilité de pivotement (PIV1) autour d'un premier axe de pivotement (A1).

19. Dispositif selon la revendication précédente, dans lequel les moyens de réception et de transport (2) comportent un organe de manipulation (22) de la lentille (100) qui possède une mobilité de pivotement (PIV2) autour d'un deuxième axe de pivotement (A2) parallèle au et distinct du premier axe de pivotement (A1), et une mobilité de translation (TR1) suivant le deuxième axe de pivotement (A2).

## Patentansprüche

1. Verfahren zum Auftragen eines Beschichtungsfilms (63) auf eine Fläche (108) einer Linse (100), wobei die Linse (100) auf einem Sitz (40) für eine Linse (100) aufgenommen wird, umfassend:
- Aufbringen des Beschichtungsfilms (63) auf die betroffene Fläche (108) der Linse (100), wobei zwischen dem Beschichtungsfilm (63) und der Linse eine Klebezwischenschicht (46) angeordnet wird,
- Aufblähen einer Membran (62) in Richtung der Linse (100), um den Beschichtungsfilm gegen die Linse (100) zu drücken, wobei die Membran (62) einen aufblähbaren Abschnitt (62B) und einen Halteabschnitt (62A) umfasst,
- Einstellen eines Abstands (Z) zwischen einem Boden des Sitzes (40) der Linse (100) und dem Halteabschnitt (62A) der Membran (62), wobei dieses Einstellen von dem Aufblähen der Membran (62) getrennt ist und in Abhängigkeit von mindestens einer Eigenschaft der Linse (100) ausgeführt wird, wobei das Einstellen des Abstands (Z) ein Vorpositionieren der Linse (100) in einer anfänglichen Position umfasst,
**dadurch gekennzeichnet, dass** das Einstellen des Abstands (Z) das dynamische Steuern der Position der Linse (100) während des Aufblähens der Membran (62) umfasst.

2. Verfahren nach dem vorhergehenden Anspruch, wobei die Eigenschaft der Linse (100), von der das Einstellen der Position abhängt, die Dicke in der Mitte und/oder die Dicke am Rand der Linse (100) umfasst.

3. Verfahren nach einem der zwei vorhergehenden Ansprüche, wobei die Eigenschaft der Linse (100), von der das Einstellen der Position abhängt, eine Krümmung der betroffenen Fläche der Linse (100) umfasst.

4. Verfahren nach einem der drei vorhergehenden Ansprüche, wobei die Eigenschaft der Linse (100), von der das Einstellen der Position abhängt, einen Durchmesser der Linse (100) umfasst.

5. Verfahren nach dem vorhergehenden Anspruch, wobei das Einstellen der Position das Steuern des Verstellens der Position der Linse (100) mit Bezug auf die Membran (62) gemäß mindestens einer vorgegebenen Funktion der Zeit umfasst.

6. Verfahren nach dem vorhergehenden Anspruch, wobei die vorgegebene Funktion aus einer vordefinierten Vielzahl von vorgegebenen Funktionen der Zeit ausgewählt wird.

7. Verfahren nach Anspruch 6 in Abhängigkeit von Anspruch 1, wobei die vorgegebene Funktion in Abhängigkeit von der mindestens einen physikalischen und/oder geometrischen Eigenschaft der Linse (100) berechnet wird.

8. Verfahren nach einem der drei vorhergehenden Ansprüche, wobei die vorgegebene Funktion mindestens eine Bewegung der Linse (100) in der der Membran (62) entgegengesetzten Richtung umfasst, gefolgt von mindestens einer Bewegung der Linse (100) zu der Membran (62) hin.

9. Verfahren nach einem der Ansprüche 1 bis 5, wobei das Einstellen das Steuern des Verstellens der Position der Linse (100) mit Bezug auf die Membran (62) gemäß einer Funktion, die von der auf die Linse (100) ausgeübten Kraft abhängt, umfasst.

10. Verfahren nach einem der vorhergehenden Ansprüche, wobei die Fläche (108) der Linse (100), auf die die Beschichtung (63) aufgetragen werden soll, konkav ist.

11. Verfahren nach einem der Ansprüche 1 bis 5, wobei das Einstellen der Position der Linse (100) mit Bezug auf die Membran (62) vor dem Aufblähen der Membran (62) stattfindet.

12. Verfahren nach einem der Ansprüche 1 bis 5, wobei das Einstellen der Position der Linse (100) mit Bezug auf die Membran (62) zusammen mit dem Aufblähen der Membran (62) stattfindet.

13. Vorrichtung (6) zum Auftragen eines Beschichtungsfilms (63), der zuvor auf die betroffene Fläche der Linse aufgebracht wurde, auf eine Fläche (108) einer Linse (100), umfassend:
- einen Sitz (40) für eine Linse (100),
- eine Membran (62), die einen Halteabschnitt (62A) und einen aufblähbaren Abschnitt (62B) beinhaltet,
- Mittel zum Aufblähen (61) der Membran (62) in Richtung des Sitzes (40) für eine Linse (100), wobei diese Aufblähmittel Mittel zum Halten (65, 66) des Halteabschnitts (62A) der Membran und Mittel zum Unterdrucksetzen (65, 66) des aufblähbaren Abschnitts (62B) der Membran (62) umfassen,
- **dadurch gekennzeichnet, dass** sie Mittel zum Einstellen (95) des Abstands (Z) zwischen dem Sitz (40) der Linse und dem Halteabschnitt (62A) der Membran (62) umfasst, wobei dieses Einstellen in Abhängigkeit von mindestens einer Eigenschaft der Linse (100) ausgeführt wird und ein Vorpositionieren der Linse (100) in einer anfänglichen Position und das dynamische Steuern der Position der Linse (100) während des Aufblähens der Membran (62) umfasst, wobei die Einstellmittel (95) Folgendes umfassen:
- Bestimmungsmittel (96), die fähig sind, die einzustellende Position des Sitzes (40) der Linse mit Bezug auf den Halteabschnitt (62A) der Membran (62) zu bestimmen, und
- Mittel zum Justieren (97, 98) der Position des Sitzes (40) der Linse mit Bezug auf den Halteabschnitt (62A) der Membran (62), die in Abhängigkeit von durch die Bestimmungsmittel (96) gelieferten Daten durch Steuermittel (99) gesteuert werden.

14. Vorrichtung nach dem vorhergehenden Anspruch, wobei die Bestimmungsmittel (96) fähig sind, die einzustellende Position des Sitzes (40) der Linse mit Bezug auf den Halteabschnitt (62A) der Membran (62) in Abhängigkeit von mindestens einer physikalischen und/oder geometrischen Eigenschaft der Linse (100) zu bestimmen.

15. Vorrichtung nach einem der Ansprüche 13 bis 14, wobei der Sitz (40) fähig ist, einen Halteblock (101) einer ophthalmischen Linse (100), die die Linse bildet, aufzunehmen.

16. Einheit für einen automatischen Transfer eines Beschichtungsfilms (63) auf eine Fläche einer Linse (100), umfassend:
- eine Auftragevorrichtung (6) nach einem der Ansprüche 13 bis 15, um den Beschichtungsfilm (63) auf die Fläche der Linse aufzutragen,
und mindestens eine der folgenden Vorrichtungen:
- eine Vorrichtung zum Reinigen (3) der Linse (100),
- eine Vorrichtung zum Handhaben (7) der Beschichtung (63), um den Beschichtungsfilm (63) zu greifen und ihn auf die Fläche der Linse (100) aufzubringen,
- eine Vorrichtung zum Aufbringen von Klebstoff (5) auf die Fläche der Linse (100) und/oder auf den Beschichtungsfilm (63),
wobei Mittel zum Aufnehmen und Transportieren (2) der Linse (100) vorgesehen sind, um die Linse (100) von einer Vorrichtung zur anderen zu befördern.

17. Einheit nach dem vorhergehenden Anspruch, wobei die Auftragevorrichtung (6) auch Mittel zum Härten (4) des Klebstoffs umfasst.

18. Einheit nach einem der zwei vorhergehenden Ansprüche, wobei die Aufnahme- und Transportmittel (2) eine Schwenkbarkeit (PIV1) um eine erste Schwenkachse (A1) besitzen.

19. Einheit nach dem vorhergehenden Anspruch, wobei die Aufnahme- und Transportmittel (2) ein Organ zum Handhaben (22) der Linse (100) umfassen, das eine Schwenkbarkeit (PIV2) um eine zweite Schwenkachse (A2), die zu der ersten Schwenkachse (A1) parallel und von dieser verschieden ist, und eine Verschiebbarkeit (TR1) entlang der zweiten Schwenkachse (A2) besitzt.

## Claims

1. A method of applying a coating film (63) on a face (108) of a lens (100), said lens (100) being received in a lens seat (40), the method comprising:
- depositing the coating film (63) on the face in question (108) of the lens (100), an adhesive interface (46) being deposited between the coating film (63) and the lens;
- inflating a membrane (62) towards the lens (100) in order to press the coating film against the lens, said membrane (62) comprising an inflatable portion (62B) and a fixing portion (62A);
- adjusting the distance (Z) between an end of the lens seat (40) and the fixing portion (62A) of the membrane (62), this adjustment being distinct from the inflation of the membrane (62) and being performed as a function of at least one characteristic of the lens (100), said adjustment of the distance (Z) comprising a prepositioning of the lens (100) in an initial position, **characterized in that** said adjustment of the distance (Z) comprises dynamically driving the position of the lens (100) during inflation of the membrane (62).

2. A method according to the preceding claim, wherein said characteristic of the lens (100) on which said position adjustment depends comprises the thickness at the center and/or the thickness at the edge of the lens (100) .

3. A method according to either preceding claim, wherein said characteristic of the lens (100) on which said position adjustment depends comprises a curvature of the face in question of the lens (100).

4. A method according to any one of the three preceding claims, wherein said characteristic of the lens (100) on which said position adjustment depends comprises a diameter of the lens (100).

5. A method according to the preceding claim, wherein said position adjustment comprises driving the variation in the position of the lens (100) relative to the membrane (62) in application of at least one predetermined function of time.

6. A method according to the preceding claim, wherein the predetermined function is selected from a predefined plurality of predetermined functions of time.

7. A method according to claim 6, as dependent on claim 1, wherein the predetermined function is calculated as a function of said at least one physical and/or geometrical characteristic of the lens (100).

8. A method according to any one of the three preceding claims, wherein the predetermined functions includes at least one movement of the lens (100) away from the membrane (62), followed by at least one movement of the lens (100) towards the membrane (62).

9. A method according to any one of claim 1 to 5, wherein the adjustment comprises driving the variation in the position of the lens (100) relative to the membrane (62) in application of a function that depends on the force exerted on the lens (100).

10. A method according to any preceding claim, wherein the face (108) of the lens (100) on which the coating (63) is to be applied is concave.

11. A method according to any one of claims 1 to 5, wherein the adjustment of the position of the lens (100) relative to the membrane (62) takes place prior to inflating the membrane (62).

12. A method according to any one of claims 1 to 5, wherein the adjustment of the position of the lens (100) relative to the membrane (62) takes place simultaneously with inflating the membrane (62).

13. A device (6) for applying a coating film (63) on a face (108) of a lens (100), the film previously being deposited on the face in question of the lens, the device comprising:
- a seat (40) for the lens (100);
- a membrane (62) comprising a fixing portion (62A) and an inflatable portion (62B);
- inflater means (61) for inflating the membrane (62) towards the seat (40) of the lens (100), said inflater means including holder means (65, 66) for holding the fixing portion (62A) of the membrane, and pressurizing means (65, 66) for pressurizing the inflatable portion (62B) of the membrane (62);
the device being **characterized in that** it includes adjustment means (95) for adjusting the distance (Z) between the seat (40) of the lens (100) and the fixing portion (62A) of the membrane (62), this adjustment being performed as a function of at least one characteristic of the lens (100)and comprising a prepositioning of the lens (100) in an initial position and dynamically driving the position of the lens (100) during inflation of the membrane (62), said adjustment means (95) comprising:
- determination means (96) suitable for determining the position at which the lens seat (40) is to be set relative to the fixing portion (62A) of the membrane (62)
- control means (97, 98) for controlling the position of the lens seat (40) relative to the fixing portion (62A) of the membrane (62), which control means are driven by driver means (99) as a function of data provided by the determination means (96).

14. A device according to the preceding claim, wherein the determination means (96) are suitable for determining the position at which the lens seat (40) is to be set relative to the fixing portion (62A) of the membrane (62) as a function of at least one physical and/or geometrical characteristic of the lens (100).

15. A device according to any one of claims 13 to 14, wherein the seat (40) is suitable for receiving a holder block (101) of an ophthalmic lens (100) constituting the lens.

16. A device for automatically transferring a coating film (63) onto a face of a lens (100), the device comprising:
- an applicator device (6) according to any to any one of claims 13 to 15 for applying the coating film (63) on the face of the lens; and
at least one of the following devices:
- a cleaner device (3) for cleaning the lens (100);
- a handler device (7) for handling the coating (63) to take hold of the coating film (63) and place it on the face of the lens (100);
- an adhesive depositor device (5) for depositing adhesive on the face of the lens (100) and/or on the coating film (63);
receiver and transport means (2) for receiving and transporting the lens (100) being provided to take the lens (100) from one device to another.

17. A device according to the preceding claim, wherein the applicator device (6) also includes adhesive hardener means (4).

18. A device according to either one of the two preceding claims, wherein the receiver and transport means (2) posses freedom to move in pivoting (PIV1) about a first pivot axis (A1).

19. A device according to the preceding claim, wherein the receiver and transport means (2) include a handler member (22) for handling the lens (100) and possessing freedom to move in pivoting (PIV2) about a second pivot axis (A2) parallel to and distinct from the first pivot axis (A1), and freedom to move in translation (TR1) along the second pivot axis (A2).
